# EUROPEAN PATENT SPECIFICATION

(11) **EP 3 254 824 B1**
(45) Date of publication and mention of the grant of the patent: **06.10.2021**
(21) Application number: 16746358.7
(22) Date of filing: 07.01.2016
(51) Int. Cl.: B29C 48/08, B29C 48/88, B29C 48/255, B29C 48/305

(54) **SHEET PRODUCTION DEVICE AND SHEET PRODUCTION METHOD**
VORRICHTUNG ZUR FOLIENHERSTELLUNG UND VERFAHREN ZUR FOLIENHERSTELLUNG
DISPOSITIF ET PROCÉDÉ DE FABRICATION DE FEUILLE

(30) Priority: 04.02.2015 JP 2015019865
(43) Date of publication of application: 13.12.2017
(73) Proprietor: TORAY INDUSTRIES, INC., Tokyo 103-8666 (JP)
(72) Inventor: KITAMURA, Osamu, Nasushiobara-shi Tochigi 329-2763 (JP); MAKI, Akihisa, Otsu-shi Shiga 520-8558 (JP); NOMURA, Fumiyasu, Nasushiobara-shi Tochigi 329-2763 (JP); KIMISHIMA, Kotaro, Nasushiobara-shi Tochigi 329-2763 (JP)
(74) Representative: Mewburn Ellis LLP
(86) International application number: PCT/JP2016/050397
(87) International publication number: WO 2016/125527

(56) References cited:
- WO-A1-2012/026416
- JP-A- H10 180 847
- JP-A- 2000 043 122
- JP-A- 2001 026 044
- JP-A- 2002 355 882
- JP-A- 2012 152 979
- JP-U- H0 671 116
- US-A- 5 618 568
- US-A1- 2013 149 405

## Description

### Technical Field

The present invention relates to a sheet production device and a sheet production method.

### Background Art

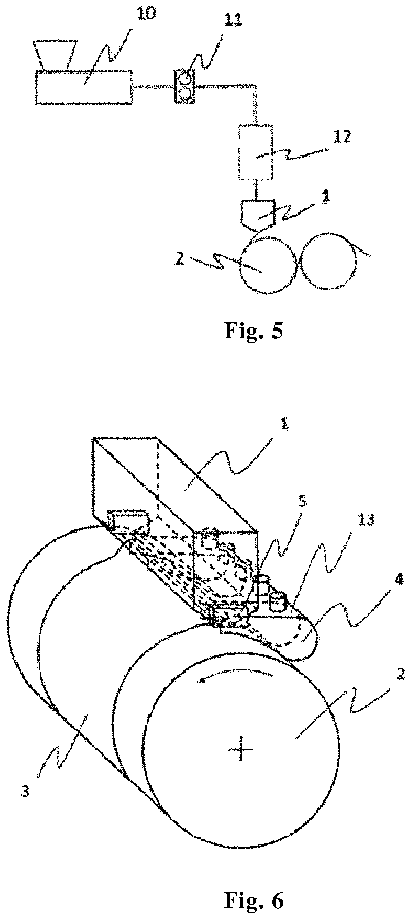

A conventional sheet production device will be outlined with reference to the drawings. Fig. 5 is a schematic diagram of part of a production device for general polymer sheets. Fig. 6 is an enlarged view of a casting step part of a conventional sheet production device. In a conventional sheet production device, resin is melted and kneaded in an extruder 10, extruded into the shape of a sheet through a mouthpiece 1, and then pulled over a cast cooling device 2 to be cooled and solidified, as shown in Fig. 6. Provided behind the mouthpiece 1, in other words, upstream of the catching position for a sheet 3 on the cast surface in the sheet conveying direction, is a pressure-reducing chamber 4 which is adjacent to the mouthpiece 1 and is shaped along the outer periphery of the cast cooling device 2. This pressure-reducing chamber 4 generates a negative-pressure region at the back side of the sheet 3, in other words, at the side in contact with the cast cooling device 2. When the sheet 3 is pulled over the cast cooling device 2, the air in the pressure-reducing chamber 4 is sucked through a suction port and a duct hose, whereby the pressure of the space between the sheet 3 and the cast cooling device 2 is reduced through the opening of the pressure-reducing chamber 4. This evacuates the air flowing in between the sheet 3 and the cast cooling device 2, and allows the sheet composed of molten resin to adhere to the cast cooling device 2. Further, external air is sucked at the ends of the pressure-reducing chamber 4, causing a peculiar vortex thereat, and this is why rectification plates 5 which regulate the flow of the air flowing in from the mouthpiece ends in the sheet width direction are provided at the ends of the mouthpiece 1 in the sheet width direction, thereby allowing the sheet to adhere in a more stable manner. (Patent Literature 1)

US 2013/0149405 A1 concerns a device for manufacturing an optical film having satisfactory reduced thickness unevenness, by using a melt-casting film forming method, which device includes a casting die for discharging a molten film-forming material including a thermoplastic resin into a film-like shape; a pair of a first rotation roll and a second rotation roll between which the discharged film-shaped molten article is pinched to be cooled and solidified to make the film shaped molten article; and two pairs of wind shield plates each of which pairs are arranged between the shaft-direction ends of the first and second rotation rolls and an end part in the width-direction of the film-shaped molten article, wherein the wind shield plates are placed approximately perpendicular to the surface of the film-shaped molten article, and wherein each pair of the wind shield plates are placed approximately in parallel. JP 2001-026044 A concerns a method for guiding the molten sheet discharged from a die slit while bringing both side end parts thereof into contact with the guide plates provided to the outer surfaces of both ends of the die slit to bring the sheet into close contact with a cooling body to cool and solidify the same, wherein the guide plates variable in shape corresponding to the neckdown of the discharged molten sheet are used to set a ratio De/Dc of the thickness Dc of the central part of the cooled and solidified sheet, and the thickness De inside by 20 mm from the end part of the sheet to 2 or less to produce a thermoplastic resin film. US 5618568 A concerns a dual-chamber vacuum box for pinning a thermoplastic web to a cooling roll includes a primary vacuum chamber connected to a first vacuum source.

### Citation List

### Patent Literature

Patent Literature 1: JP 2000-225627 A

### Summary of Invention

### Technical Problem

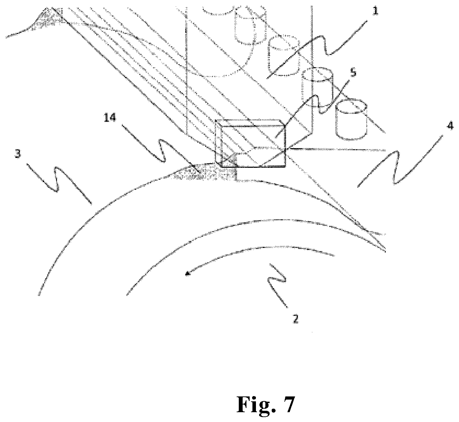

However, when the air between the sheet and the cast cooling device 2 is sucked by the pressure-reducing chamber 4, the air flow between the sheet and the cast cooling device 2 is not uniform, and air flows in from different directions, so that the air flow is remarkably prone to cause turbulence. On that account, controlling the air flow at the sheet ends is an important point in forming the sheet in a stable manner. However, if the distance (clearance) between the mouthpiece and the cast cooling device surface is wide at the sheet ends as shown in Fig. 7, an increase in distance (clearance) between the sheet and the cast cooling device 2 and the accompanying neck-in increase cause an increase in the gap 14, hence making it more difficult to rectify the air flow. On that account, vibrations still occur at the ends of the sheet, causing surface roughnesses such as lateral irregularities, creases, and the like to the sheet during the formation thereof.

In view of the aforementioned problem, the present invention provides a sheet production device and a sheet production method which can rectify air flow at the sheet ends and can thereby stabilize the formation of a sheet.

### Solution to Problem

The sheet production device of the present invention to solve the aforementioned problem is as follows: a sheet production device including: a mouthpiece for discharging molten resin in the shape of a sheet; a cast cooling device for cooling and solidifying the sheet discharged from the mouthpiece while conveying the sheet; and a pressure-reducing chamber disposed upstream of the mouthpiece in the conveying direction of the cast cooling device for sucking air from between the sheet discharged from the mouthpiece and the cast cooling device to generate a negative-pressure region at the back side of the sheet which side is in contact with the cast cooling device; characterised by further including: two rectification plates disposed downstream of a lip of the mouthpiece in the conveying direction of the cast cooling device and at positions more external than the end positions in the width direction of the sheet discharged from the mouthpiece, wherein the rectification plates are disposed such that a gap between the sheet discharged from the mouthpiece and the cast cooling device is occluded; wherein a distance between the two rectification plates in the sheet width direction gradually decreases toward downstream of the cast cooling device in the conveying direction.

The sheet production method of the present invention to solve the aforementioned problem is a sheet production method for producing a sheet using the sheet production device of the present invention.

Examples of "resin" that can be used in the present invention include fluids made by dissolving in a diluent or melting the following: polyolefin resins such as polyethylene, polypropylene, polystyrene, and polymethylpentene; alicyclic polyolefin resins; polyamide resins such as nylon 6 and nylon 66; aramid resins; polyester resins such as polyethylene terephthalate, polybutylene terephthalate, polypropylene terephthalate, polybutyl succinate, and polyethylene-2,6-naphthalate; polycarbonate resins; polyalylate resins; polyacetal resins; polyphenylene sulfide resins; fluorine resins such as tetrafluoroethylene resin, trifluoroethylene resin, chlorotrifluoroethylene resin, tetrafluoroethylene-hexafluoropropylene copolymer, and vinylidene fluoride resin; acryl resins; methacryl resins; polyacetal resins; polyglycolic acid resins; polylactic acid resins; and the like. In addition, the use of a diluent including a liquid film-forming solvent makes it possible that it is not very difficult to stretch at a relatively high multiplying factor. These thermoplastic resins may be homo resins or may be copolymers or blends of two kinds or more. "Diluents" may be, for example, aliphatic, alicyclic, or aromatic hydrocarbons such as nonane, decane, decalin, p-xylene, undecane, and dodecene; liquid paraffins; mineral oil distillates having a boiling point similar to that of the aforementioned hydrocarbons; phthalate esters which are liquids at room temperature, such as dibutyl phthalate and dioctyl phthalate; and the like. In addition, various additives, for example, antioxidants, antistatic agents, nucleating agents, inorganic particles, organic particles, viscosity reducing agents, heat stabilizers, lubricants, infrared absorbers, ultraviolet absorbers, dopants for regulating refractive indices, and the like may be added to each thermoplastic resin.

As used herein, the term "lip" refers to a slit opening through which to extrude molten resin in the shape of a sheet from the mouthpiece. As used herein, "longitudinal" refers to the longitudinal direction of a sheet, "width direction" refers to the width direction of a sheet, "upstream" refers to the upstream side in the conveying direction of a cast sheet, and "downstream" refers to the downstream side in the conveying direction of a cast sheet. As used herein, "heat-resistant temperature" refers to a use safety heat-resistant temperature which enables continuous use. As used herein, "lateral irregularity" refers to thickness unevenness periodically occurring in the sheet conveying direction on the surface of a sheet over the cast cooling device because a sheet discharged from the mouthpiece undergoes air vibration due to the influence on the ambient air flow by the suction in the pressure-reducing chamber before the sheet catches on the cast cooling device.

### Advantageous Effects of Invention

According to the present invention, the flow of air flowing in through the gap between the sheet discharged from the mouthpiece and the cast cooling device can be rectified in the suction by the pressure-reducing chamber at the adherent portion between the sheet and the cast cooling device. As a result, the sheet discharged from the mouthpiece can be casted over the cast cooling device surface in a stable manner.

### Brief Description of Drawings

Fig. 1 is a schematic view of an embodiment of the sheet production device of the present invention.
Fig. 2 is an enlarged view of the sheet production device of Fig. 1.
Fig. 3 is a side view of the sheet production device of Fig. 1.
Fig. 4 is a top view of the sheet production device of Fig. 1.
Fig. 5 is a schematic diagram illustrating a production device for polymer sheets.
Fig. 6 is a schematic view of a conventional sheet production device.
Fig. 7 is an enlarged view of the sheet production device of Fig. 6.

### Description of Embodiments

Below, the embodiment will be described in detail, but the present invention is not to be limited to the embodiment including the below-mentioned Examples.

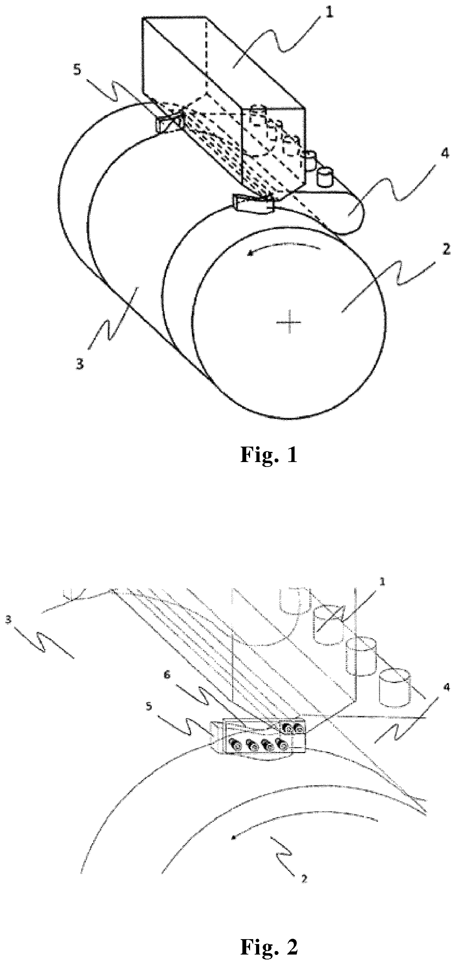

Fig. 1 is a schematic cross-sectional view of a sheet casting device which is an embodiment of the present invention. As illustrated in Fig. 1, the device includes a mouthpiece 1 from which resin melted in an extruder is discharged in the shape of a sheet and a cast cooling device 2 for cooling and solidifying a sheet 3 discharged from the mouthpiece 1 while pulling and conveying the sheet, and the discharged sheet is cast over the cast cooling device surface which is running. For this, the cast cooling device may be a roll or a belt.

Provided behind the mouthpiece 1, in other words, upstream of the catching position for the sheet 3 on the cast surface in the sheet conveying direction, is a pressure-reducing chamber 4 which is adjacent to the mouthpiece 1 and is shaped along the outer periphery of the cast cooling device 2. This pressure-reducing chamber 4 generates a negative-pressure region at the back side of the sheet 3, in other words, at the side in contact with the cast cooling device 2. The pressure-reducing chamber 4 has an opening and a pressure-reducing section, and the opening is formed over the full width of the sheet immediately near the portion at which the sheet 3 starts adhering to the outer periphery of the cast cooling device 2. In addition, the air in the pressure-reducing section is sucked from the opening of the pressure-reducing chamber 4, and the air in the adhering portion between the sheet and the cast cooling device 2 is expelled. This causes the pressure in the adhering portion to be reduced, and the air entrained between the sheet and the cast cooling device 2 is expelled. In addition, controlling the level of pressure reduction to a predetermined pressure allows the sheet 3 composed of molten resin to adhere to the cast cooling device 2 in a stable manner. This pressure-reducing chamber constitutes an adhering means.

During this, it is preferable that the level of pressure reduction in the pressure-reducing chamber 4 be controlled to a predetermined value in accordance with the film-production conditions such as the viscosity of a molten polymer, the thickness of a sheet, and the sheet conveying rate of the cast cooling device. The suction pressure in the pressure-reducing chamber 4 relative to the atmospheric pressure is preferably in the range of -2500 Pa to -20 Pa. The lower limit of the suction pressure in the pressure-reducing chamber 4 relative to the atmospheric pressure is more preferably -1500 Pa or more, and the upper limit is further preferably -50 Pa or less.

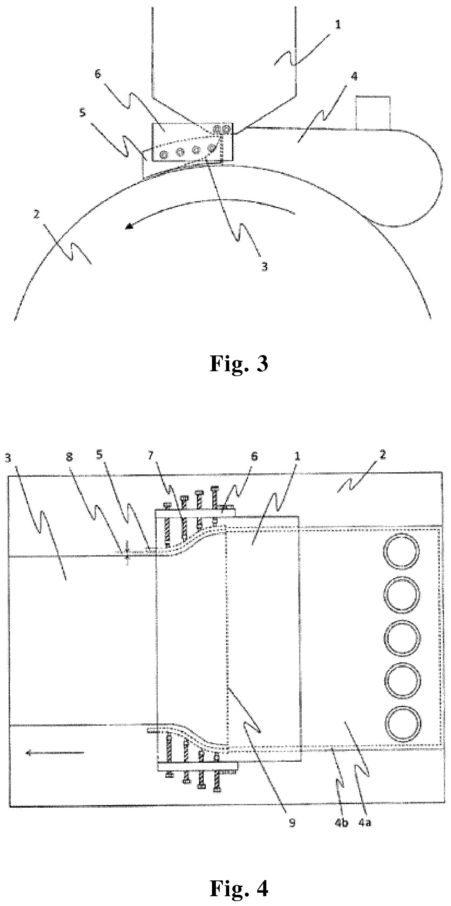

Fig. 2 is an enlarged view illustrating a configuration and a mounting state of the pressure-reducing chamber in the present invention. In addition, Fig. 3 is a side view of Fig. 2, and Fig. 4 is a top view of Fig. 2.

As shown in Fig. 2 to 4, the present embodiment includes rectification plates disposed downstream of the lip of the mouthpiece 1 in the conveying direction of the cast cooling device 2, and at positions more external than both end positions in the sheet width direction of the sheet 3 discharged from the mouthpiece 1, wherein the rectification plates are disposed at both ends of the mouthpiece in the width direction such that gaps between the sheet 3 discharged from the mouthpiece 1 and the cast cooling device 2 are occluded. The rectification plate 5 is mounted, being adhered and secured with bolts, to an adjusting mechanism enabling push and pull. In addition, screw holes are provided in the side plates of the mouthpiece 1. The rectification plate 5 is held by the bracket 6, which is mounted to the mouthpiece 1 with bolts passed through the holes provided in the bracket 6 and tightened into the screw holes of the mouthpiece side plate. This mounting method is one example only, and methods different from this mounting method may be used. For example, the bracket 6 may be mounted to the pressure-reducing chamber itself. Alternatively, the bracket may be configured to be integrated with the pressure-reducing chamber 4 or the mouthpiece 1.

As shown in Fig. 4, the adjusting mechanism involves push and pull performed through the rotation of the positioning bolts 7, and has a joint for preventing corotation between the tip plate secured to the rectification plate 5 by adhesion or bolting and the positioning bolts 7. By using these positioning bolts 7 to cause the opposite surface of the rectification plate 5 from the side facing the sheet end to be pushed and pulled in the sheet width direction, the surface figure of the side of the rectification plate 5 which faces the sheet end can be changed. The adjusting mechanism preferably causes the surface of the side of the rectification plate 5 which faces the sheet end to be bent at least two points or more along the cast cooling device 2 in the conveying direction in accordance with the number of the flexion points in the neck-in of the sheet. In addition, an elastic seal member is provided between the mouthpiece 1 and the pressure-reducing chamber 4, and this elastic seal member seals the gap between the mouthpiece 1 and the pressure-reducing chamber 4. Further, an elastic seal member is also provided between the cast cooling device 2 and the pressure-reducing chamber 4 in a similar manner, sealing the gap between the cast cooling device 2 and the pressure-reducing chamber 4.

The configuration of the rectification plate 5 of the present embodiment will be described. The distance in the sheet width direction between the rectification plates disposed at both ends of the mouthpiece in the width direction decreases gradually toward downstream of the cast cooling device 2 in the conveying direction, and the distance L in the sheet width direction between any position of the end in the width direction of the sheet 3 discharged from the mouthpiece 1 and the rectification plate 5 is constant. This allows the neck-in shape at the ends of the sheet 3 discharged from the mouthpiece 1 to be followed. In particular, a constant distance L in the sheet width direction between any position of the end of the sheet 3 in the width direction and the rectification plate 5 keeps constant the flow velocity of air flowing in from the rectification plate 5 and the end of the sheet 3, whereby the effect of suppressing film vibration can further be obtained. In addition, as illustrated in Fig. 4, it is preferable that the end on the upstream side of the rectification plate in the sheet conveying direction be disposed so as to be linked to the extension of the side plate 4b of the pressure-reducing chamber, whereby the air flowing in from the joint between the rectification plate and the pressure-reducing chamber can be suppressed to a minimum. In this regard, although the distance L has been mentioned as "constant", the distance to the rectification plate 5 does not have to be strictly the same value and allows an error of ±10%, as measured at any position of the end of the sheet in the width direction.

The distance L in the sheet width direction between any position of the end of the sheet 3 in the width direction and the rectification plate 5 is preferably 50 mm or less in view of preventing the turbulence of a direction of the air flowing from the sheet end, reducing the flopping of the sheet, and thereby suppressing the occurrence of surface roughnesses such as lateral irregularities and of creases. On that account, the distance L is ideally 0 mm, and it is preferable to reduce the pressure in the pressure-reducing chamber 4 in a stable manner by having a high degree of seal. In this case, however, the sheet end comes into contact with the rectification plate, because of which it is preferable, in view of inhibiting the sticking of the sheet to the rectification plate, to use a material having a high slipperiness such as a Teflon® sheet as a material for the rectification plate. More preferably, the distance L is set to 0.1 to 50 mm in order to prevent the sheet end from coming into contact with the rectification plate and secure the stability of the formability of the sheet end. The upper limit of the distance L is more preferably 10 mm or less to inhibit the flopping of the sheet further. In addition, as long as the distance L is in the aforementioned range, the surface figure of the side of the rectification plate 5 which faces the sheet end may be shaped along the sheet end or planar.

The surface figure of the side of the rectification plate 5 which faces the sheet end may be varied along the sheet conveying direction of the cast cooling device 2. In the present embodiment, the rectification plate in whole is curved along the shape of the sheet end, but the rectification plate does not necessarily have to be curved in whole. As long as only the surface figure of the side of the rectification plate 5 which faces the sheet end can be varied so as to follow the shape of the sheet end, it is sufficient.

A material for the rectification plate 5 is preferably at least one kind selected from the group consisting of rubber, metal, resin, paper, and wood, and is more preferably rubber.

When rubber is used as a material for the rectification plate 5, the rubber preferably has a JIS A hardness of less than 80 degrees and a degree of elongation of 130% or more. The use of rubber having such a hardness and degree of elongation causes the rigidity to maintain the shape as a plate and makes it easy for the surface figure of the side of this rectification plate 5 which faces the sheet end to be varied along the sheet end. In addition, the heat-resistant temperature of rubber is preferably 150°C or more. When the heat-resistant temperature is 150°C or more, the material can be prevented from being deteriorated by the heat received from the surrounding high temperature portion such as the mouthpiece.

### Examples

### (Example 1)

The results from producing a sheet using the aforementioned sheet production device will be described. The configuration and production conditions of a specific sheet production device in the present embodiment are as follows:

### (1) Sheet material:

High density polyethylene (HDPE), viscosity 1000 Pa·s. Here, the viscosity was measured in accordance with the method in JIS K7117-2 under the conditions of a shear rate of 100/s and a temperature of 200°C.

### (2) Charge stock:

The sheet material was dried, then fed into the extruder, passed through the gear pump and the filter, and then fed into the sheet-forming mouthpiece. In addition, the device temperature up to the mouthpiece was set to 200°C.

### (3) Sheet-forming mouthpiece:

The slit 300 mm in width, through which the resin was discharged at a flow rate of 250 kg/hr.

### (4) Cast cooling device:

Using a sheet-forming roll as a cast cooling device, the material was extruded in the shape of a sheet through the sheet-forming mouthpiece, followed by formation on the cooling roll with the roll temperature set to 35°C.

### (5) Pressure-reducing chamber:

The pressure-reducing chamber was installed with a clearance of 40 mm between the sheet-forming mouthpiece and the sheet-forming roll and with the lip of the mouthpiece positioned at the top of the roll. In addition, the distance L in the sheet width direction between any position of the end of the sheet and the rectification plate was adjusted to 50 mm. Further, the rectification plate was based on JIS K6251, and silicon rubber having a Shore A hardness of 75, an elongation of 400%, and a heat-resistant temperature of 200°C was used. The level of pressure reduction was set so as to be -1200 Pa relative to the atmospheric pressure.

As a result of performing film-production, a stable operating condition was obtained on the cast surface of the sheet, and a sheet having a favorable quality was obtained, having a thickness unevenness R of 2.5% and no appearance defect due to film vibration, such as lateral irregularities.
Here, "thickness unevenness R" refers to a ratio resulting from subtracting a minimum sheet thickness from a maximum sheet thickness in the sheet conveying direction and then dividing the difference by the average sheet thickness.

### (Example 2)

A sheet was produced using the same sheet production device as in Example 1 except that silicon rubber for the rectification plate had a Shore A hardness of 50, an elongation of 330%, and a heat-resistant temperature of 150°C, and based on the same production conditions as in Example 1 except that the distance L in the sheet width direction between any position of the end of the sheet and the rectification plate was adjusted so as to be 10mm. As a result of performing film-production, a stable operating condition was obtained on the cast surface of the sheet, and a sheet having a favorable quality was obtained, having a thickness unevenness R of 1.0% and no appearance defect due to film vibration, such as lateral irregularities.

### (Comparative Example 1)

A sheet was produced based on the same production conditions as in Example 1 except that the rectification plate was removed from the sheet production device of Example 1.

As a result of performing film-production, a large film vibration occurred at the ends of the sheet between the mouthpiece and the cast surface, the thickness unevenness R was large at 10%, lateral irregularities having a pitch in the sheet conveying direction on the sheet in whole were seen, and thus the sheet could not be produced in a stable manner.

### Industrial Applicability

The present invention can be applied to not only a sheet casting device but also a die coating device and the like, and the applicable scope is not to be limited to these.

### Reference Signs List

- 1: mouthpiece
- 2: cast cooling device
- 3: sheet
- 4: pressure-reducing chamber
- 4a: top plate
- 4b: side plate
- 5: rectification plate
- 6: bracket
- 7: positioning bolt
- 8: distance L from sheet end to rectification plate in the sheet width direction
- 9: mouthpiece lip
- 10: extruder
- 11: gear pump
- 12: filter
- 13: barrier
- 14: gap between sheet and cast cooling device

## Claims

1. A sheet production device comprising:
a mouthpiece (1) for discharging molten resin in the shape of a sheet (3);
a cast cooling device (2) for cooling and solidifying the sheet (3) discharged from the mouthpiece (1) while conveying the sheet (3); and
a pressure-reducing chamber (4) disposed upstream of the mouthpiece (1) in the conveying direction of the cast cooling device (2) for sucking air from between the sheet (3) discharged from the mouthpiece (1) and the cast cooling device (2) to generate a negative-pressure region at the back side of the sheet (3) which side is in contact with the cast cooling device (2);
**characterised by** further comprising: two rectification plates (5) disposed downstream of a lip (9) of the mouthpiece (1) in the conveying direction of the cast cooling device (2) and at positions more external than the end positions in the width direction of the sheet (3) discharged from the mouthpiece (1), wherein the rectification plates (5) are disposed such that a gap between the sheet (3) discharged from the mouthpiece (1) and the cast surface is occluded;
wherein a distance between the two rectification plates (5) in the sheet width direction gradually decreases toward downstream of the cast cooling device (2) in the conveying direction.

2. The sheet production device according to claim 1, comprising an adjusting mechanism that changes the figure of the surface of the rectification plate (5) which faces the end of the sheet (3) in the width direction by pushing or pulling the surface of the rectification plate (5) opposite to the surface which faces the end of the sheet (3) in the width direction.

3. The sheet production device according to claim 1 or 2, wherein a material for the rectification plate (5) is at least one kind selected from the group consisting of rubber, metal, resin, paper, and wood.

4. The sheet production device according to claim 3, wherein the material for the rectification plate (5) is rubber and the rubber has a JIS hardness A of less than 80 degrees and a degree of elongation of 130% or more.

5. The sheet production device according to claim 3 or 4, wherein the material for the rectification plate (5) is rubber and the rubber has a heat-resistant temperature of 150°C or more.

6. A sheet production method using the sheet production device according to any one of claims 1 to 5.

7. The sheet production method according to claim 6, wherein a distance L in the sheet width direction between any position of the end in the width direction of the sheet (3) discharged from the mouthpiece (1) and the rectification plate (5) is constant.

8. The sheet production method according to claim 7, wherein the distance L is in the range of 0.1 to 50 mm.

## Patentansprüche

1. Folienherstellungsvorrichtung, die Folgendes umfasst:
ein Mundstück (1) zur Ausgabe von geschmolzenem Harz in Form einer Folie (3);
eine Gusskühlvorrichtung (2) zum Kühlen und Verfestigen der Folie (3), die aus dem Mundstück (1) ausgegeben wird, während die Folie (3) weitertransportiert wird; und
eine Druckreduktionskammer (4), die stromauf des Mundstücks (1) in Transportrichtung der Gusskühlvorrichtung (2) zum Ansaugen von Luft von zwischen der Folie (3), die aus dem Mundstück (1) ausgegeben wird, und der Gusskühlvorrichtung (2), um einen Bereich mit Unterdruck an der Rückseite der Folie (3) zu erzeugen, welche Seite mit der Gusskühlvorrichtung (2) in Kontakt steht;
**dadurch gekennzeichnet, dass** die Vorrichtung ferner Folgendes umfasst:
zwei Gleichrichtungsplatten (5), die stromab eines Rands (9) des Mundstücks (1) in Transportrichtung der Gusskühlvorrichtung (2) und an Positionen angeordnet sind, die außenliegender als die Endpositionen in der Breitenrichtung der Folie (3) sind, die aus dem Mundstück (1) ausgegeben wird, wobei die Gleichrichtungsplatten (5) so angeordnet sind, dass ein Spalt zwischen der Folie (3), die aus dem Mundstück (1) ausgegeben wird, und der Gussoberfläche verschlossen wird;
wobei ein Abstand zwischen den zwei Gleichrichtungsplatten (5) in der Folienbreitenrichtung in Stromabwärtsrichtung der Gusskühlvorrichtung (2) in Transportrichtung allmählich abnimmt.

2. Folienherstellungsvorrichtung nach Anspruch 1, die einen Einstellmechanismus umfasst, der die Form der Oberfläche der Gleichrichtungsplatte (5), die dem Ende der Folie (3) in der Breitenrichtung zugewandt ist, durch Drücken oder Ziehen der Oberfläche der Gleichrichtungsplatte (5) gegenüberliegend zur Oberfläche, die dem Ende der Folie (3) in der Breitenrichtung zugewandt ist, ändert.

3. Folienherstellungsvorrichtung nach Anspruch 1 oder 2, wobei ein Material für die Gleichrichtungsplatte (5) zumindest einer Art entspricht, die aus der aus Gummi, Metall, Harz, Papier und Holz bestehenden Gruppe ausgewählt ist.

4. Folienherstellungsvorrichtung nach Anspruch 3, wobei das Material für die Gleichrichtungsplatte (5) Gummi ist und der Gummi eine JIS-Härte A von weniger als 80° und einen Dehnungsgrad von 130 % oder mehr aufweist.

5. Folienherstellungsvorrichtung nach Anspruch 3 oder 4, wobei das Material für die Gleichrichtungsplatte (5) Gummi ist und der Gummi eine hitzebeständige Temperatur von 150 °C oder mehr aufweist.

6. Folienherstellungsverfahren unter Verwendung einer Folienherstellungsvorrichtung nach einem der Ansprüche 1 bis 5.

7. Folienherstellungsverfahren nach Anspruch 6, wobei ein Abstand L in der Folienbreitenrichtung zwischen einer beliebigen Position am Ende in der Breitenrichtung der Folie (3), die aus dem Mundstück (1) ausgegeben wird, und der Gleichrichtungsplatte (5) konstant ist.

8. Folienherstellungsverfahren nach Anspruch 7, wobei der Abstand L im Bereich von 0,1 bis 50 mm liegt.

## Revendications

1. Dispositif de fabrication de feuille comprenant :
un embout (1) pour décharger de la résine fondue sous la forme d'une feuille (3) ;
un dispositif de refroidissement de coulée (2) pour refroidir et solidifier la feuille (3) déchargée de l'embout (1) tout en transportant la feuille (3) ; et
une chambre de réduction de pression (4) disposée en amont de l'embout (1) dans la direction de transport du dispositif de refroidissement de coulée (2) pour aspirer de l'air entre la feuille (3) déchargée à partir de l'embout (1) et le dispositif de refroidissement de coulée (2) afin de générer une région de pression négative au niveau du côté arrière de la feuille (3), lequel côté est en contact avec le dispositif de refroidissement de coulée (2) ;
**caractérisé en ce qu'**il comprend en outre : deux plaques de rectification (5) disposées en aval d'une lèvre (9) de l'embout (1) dans la direction de transport du dispositif de refroidissement de coulée (2) et à des positions plus externes que les positions d'extrémité dans la direction de largeur de la feuille (3) déchargée à partir de l'embout (1), dans lequel les plaques de rectification (5) sont disposées de telle sorte qu'un espace entre la feuille (3) déchargée à partir de l'embout (1) et la surface de coulée est obstrué ;
dans lequel une distance entre les deux plaques de rectification (5) dans la direction de la largeur de la feuille diminue progressivement vers l'aval du dispositif de refroidissement de coulée (2) dans la direction de transport.

2. Dispositif de fabrication de feuille selon la revendication 1, comprenant un mécanisme d'ajustement qui change la figure de la surface de la plaque de rectification (5) qui fait face à l'extrémité de la feuille (3) dans la direction de largeur en poussant ou en tirant la surface de la plaque de rectification (5) opposée à la surface qui fait face à l'extrémité de la feuille (3) dans la direction de largeur.

3. Dispositif de fabrication de feuille selon la revendication 1 ou 2, dans lequel un matériau pour la plaque de rectification (5) est au moins un type choisi dans le groupe comprenant caoutchouc, métal, résine, papier et bois.

4. Dispositif de fabrication de feuille selon la revendication 3, dans lequel le matériau pour la plaque de rectification (5) est du caoutchouc et le caoutchouc a une dureté JIS A inférieure à 80 degrés et un degré d'allongement de 130 % ou plus.

5. Dispositif de fabrication de feuille selon la revendication 3 ou 4, dans lequel le matériau de la plaque de rectification (5) est du caoutchouc et le caoutchouc a une température de résistance à la chaleur de 150°C ou plus.

6. Procédé de fabrication de feuille utilisant le dispositif de fabrication de feuille selon l'une quelconque des revendications 1 à 5.

7. Procédé de fabrication de feuille selon la revendication 6, dans lequel une distance L dans la direction de largeur de feuille entre une position quelconque de l'extrémité dans la direction de largeur de la feuille (3) déchargée à partir de l'embout (1) et la plaque de rectification (5) est constante.

8. Procédé de fabrication de feuille selon la revendication 7, dans lequel la distance L est dans la plage de 0,1 à 50 mm.
